# EUROPÄISCHE PATENTSCHRIFT

(11) **EP 1 294 693 B1**
(45) Veröffentlichungstag und Bekanntmachung des Hinweises auf die Patenterteilung: **15.09.2004**
(21) Anmeldenummer: 01956459.0
(22) Anmeldetag: 06.06.2001
(51) Int. Cl.: C07D 213/90, C09B 29/00, C09B 29/09

(54) **HYDROXYPYRIDONMETHIDAZOFARBSTOFFE**
HYDROXYPYRIDONE METHIDE AZO DYES
COLORANTS HYDROXYPYRIDONEMETHIDAZO

(30) Priorität: 09.06.2000 DE 10028686
(43) Veröffentlichungstag der Anmeldung: 26.03.2003
(73) Patentinhaber: DyStar Textilfarben GmbH & Co. Deutschland KG, 65926 Frankfurt am Main (DE)
(72) Erfinder: HAMPRECHT, Rainer, 51519 Odenthal (DE)
(86) Internationale Anmeldenummer: PCT/EP2001/006408
(87) Internationale Veröffentlichungsnummer: WO 2001/094314

(56) Entgegenhaltungen:
- EP-A- 0 268 897
- EP-A- 0 302 401
- EP-A- 0 314 002
- EP-A- 0 585 654
- EP-A- 0 767 220

## Beschreibung

Die Erfindung betrifft neue Hydroxypyridonmethidazofarbstoffe, Verfahren zu ihrer Herstellung und ihre Verwendung sowie Farbstoffmischungen enthaltend Hydroxypyridonmethidazofarbstoffe.

Aus EP-A 767 220 sind bereits ähnliche Azofarbstoffe bekannt. Diese Farbstoffe sind jedoch hinsichtlich ihrer anwendungstechnischen Eigenschaften, insbesondere ihrer Thermomigrierechtheit noch verbesserungsbedürftig.

Es wurden neue Hydroxypyridonmethidazofarbstoffe gefunden, die sich überraschenderweise durch hervorragende Thermomigrierechtheit und Sublimierechtheit bei Erhalt der guten Allgemeinechtheiten auszeichnen.

Gegenstand der vorliegenden Erfindung sind neue Hydroxypyridonmethidazofarbstoffe entsprechend der Formel (I), sowie deren tautomere Formen, 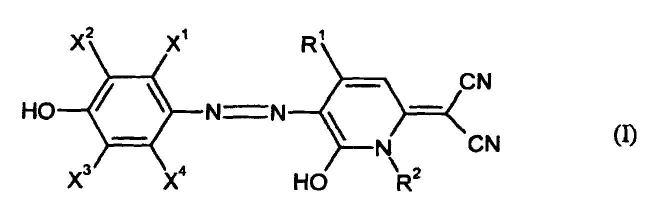 worin
- X¹: für H, Cl, Br, -CO₂-R² oder -NO₂ steht,
- X², X³ und X⁴: unabhängig voneinander für H, Cl oder Br stehen,
- R¹: für H, -CH₃, -C₂H₅, -CH(CH₃)₂, unsubstituiertes Phenyl oder CF₃ steht und
- R²: für CH₃ oder C₂H₅ steht.

Die Farbstoffe der Formel (I) können auch in tautomeren Formen, von denen als wichtigste die Formel (Ia) 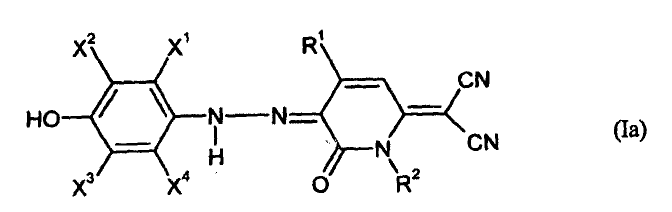 genannt sei, auftreten. Im Sinne der vorliegenden Erfindung schließt die Formel (I) in ihren allgemeinen und bevorzugten Bedeutungen sämtliche mögliche tautomere Formen, insbesondere die der Formel (Ia), ein.

Bevorzugt sind Hydroxypyridonmethidazofarbstoffe der Formel (I) oder (Ia) worin
- X² X³ und X⁴: für H stehen.

Besonders bevorzugt sind Farbstoffe der Formeln (I) und (Ia), worin
- X², X³ und X⁴: für H stehen,
- R¹: für H, -CH₃, -C₂H₅, -CH(CH₃)₂, unsubstituiertes Phenyl oder CF₃ steht, und
- R²: für CH₃ oder C₂H₅ steht.

Ganz besonders bevorzugt sind Farbstoff der Formel (1), worin
- X¹: für H, Cl, Br, oder -NO₂ steht,
- X², X³ und X⁴: für H stehen,
- R¹: für H, -CH₃, -C₂H₅, oder -CH(CH₃)₂ steht, und
- R²: für CH₃ oder -C₂H₅ steht.

Insbesondere bevorzugt sind Farbstoffe der Formel (I), worin
- X¹: für Nitro,
- X², X³ und X⁴: für H,
- R¹: für H oder CH₃ und
- R²: für CH₃ oder C₂H₅ steht.

Die erfindungsgemäßen Farbstoffe können beispielsweise durch Diazotierung von Aminen der Formel (II) 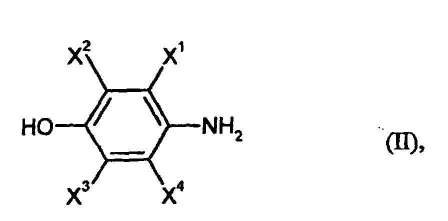 worin
- X¹, X², X³ und X⁴: die oben angegebenen Bedeutung haben,
und Kupplung auf Kupplungskomponenten der Formel (III) 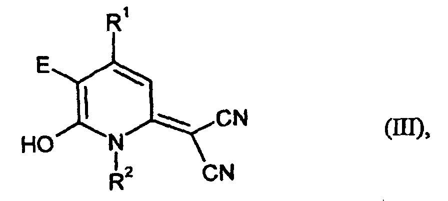 worin
- R¹ und R²: die oben angegebene Bedeutung haben und
- E: für einen durch elektrophile Substitution verdrängbaren Substituenten, vorzugsweise für H, -CO₂H, -CH₂OH, -SO₃H, -CH=O, -COT, -CONH₂, - CONHT steht,
und wobei T für geradkettiges oder verzweigtes C₁-C₁₀-Alkyl steht, das gegebenenfalls durch 1 oder 2 Sauerstoffatome in Etherfunktion unterbrochen und/oder durch einen oder mehrere, bevorzugt einen Phenyl- oder Hydroxyrest substituiert ist oder für Phenyl steht, das gegebenenfalls durch 1 bis 2 gleiche oder verschiedene Reste aus der Reihe Cl, Br, C₁-C₂-Alkyl substituiert ist.
hergestellt werden.

Ein derartiges Kupplungsverfahren unter Verdrängung eines Substituenten ist z.B. in GB-A 2 036 775 und JP-A 58 157 863 beschrieben.

Die Kupplungsreaktion kann in wässrigen und nichtwässrigen Lösungsmitteln erfolgen. Unter den nichtwässrigen Lösungsmitteln seien Alkohole wie Methanol, Ethanol, Propanol, Butanol, Pentanol etc., dipolare aprotische Lösungsmittel wie DMF, DMSO, NMP und mit Wasser nicht mischbare Lösungsmittel wie Toluol oder Chlorbenzol genannt.

Die Kupplung wird vorzugsweise im stöchiometrischen Verhältnis von Kupplungs- und Diazokomponente durchgeführt, wobei es vorteilhaft und z.T. aus ökonomischen Gründen sinnvoll sein kann, die billigere Komponente in bis zu 30 %igem Überschuss einzusetzen.

Die Kupplung erfolgt im allgemeinen bei Temperaturen zwischen -30 bis 100°C, bevorzugt sind Temperaturen von -10 bis 30°C, besonders bevorzugt Temperaturen von -5 bis 10°C.

Die Kupplung kann im sauren wie auch im alkalischen Milieu ausgeführt werden. Bevorzugt werden pH-Werte < 10, besonders bevorzugt < 7,0 und ganz besonders bevorzugt < 5,0.

Die Diazokomponenten der Formel (In sind literaturbekannt und zum Teil auch, wie das besonders bevorzugte 3-Nitro-4-aminophenol, technisch erhältlich.

Die Kupplungskomponenten der Formel (III) sind ebenfalls bekannt und ihre Herstellung z.B. in EP-A 767 220 beschrieben.

Die erfindungsgemäßen Farbstoffe der Formel (I) eignen sich als solche, im Gemisch untereinander oder auch im Gemisch mit anderen Dispersionsfarbstoffen zum Färben und Bedrucken auch mittels des Ink-Jet-Verfahrens, von hydrophoben synthetischen Fasermaterialien und deren Mischungen mit natürlichen Faserstoffen.

Als hydrophobe, synthetische Materialien kommen z.B. in Betracht: Cellulose-2½-Acetat, Cellulosetriacetat, Polyamide und besonders Polyester, wie z.B. Polyethylenglykolterephthalat. Als natürliche Faserstoffe seien z.B. Baumwolle, regnerierte Cellulosefasern oder Wolle genannt.

Weiterhin sind die erfindungsgemäßen Farbstoffe oder deren Gemische geeignet zum Färben und Bedrucken von Wachsen, Ölen und Kunststoffen wie Polymethacrylat, PVC, Polystyrol oder ABS.

Ferner sind sie geeignet für textilen und nichttextilen Thermotransferdruck z.B. mittels eines Thermokopfes.

Die Färbe- und Druckbedingungen, die auch das Färben in überkritischem Kohlendioxid einschließen, sind an sich bekannt, vgl. z.B. EP-A 827 988, DE-A 3 508 904 und EP-A 474 600.

Die erfindungsgemäßen Farbstoffe oder deren Mischungen können auch zum Färben von keratinischen Fasern, z.B. bei der Haarfärbung oder der Färbung von Pelzen, verwendet werden.

Die neuen Farbstoffe der Formel (I) oder deren Mischungen eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die erfindungsgemäßen Farbstoffe oder deren Mischungen liefern auf Polyester orange bis violette Färbungen mit hervorragender Thermomigrierechtheit und Sublimierechtheit, hoher Farbstärke und klarer Nuance.

Ein besonders gutes Zieh- und Aufbauvermögen lässt sich hierbei durch Mischungen der Farbstoffe der Formel (I) erreichen, die zwei oder mehr, vorzugsweise zwei bis 4 unterschiedliche Farbstoffe der Formel (I) enthalten. Bevorzugt sind hierbei Mischungen, die sich in den Substituenten R¹ und/oder R² unterscheiden.

Gegenstand der vorliegenden Erfindung sind weiterhin Farbstoffminschungen enthaltend mindestens einen Farbstoff der Formel (I) sowie mindestens einen weiteren Dispersionsfarbstoff. Als Dispersionsfarbstoffe eignen sich hierzu die im Colour Index gelisteten Dispersionsfarbstoffe, insbesondere Benzodifuranonfarbstoffe, sowie weiterhin die aus EP-A 767 220 bekannten Dispersionsfarbstoffe.

Bevorzugt als Mischungsfarbstoffe geeignete Benzodifuranonfarbstoffe leiten sich von der Formel (IV) ab, 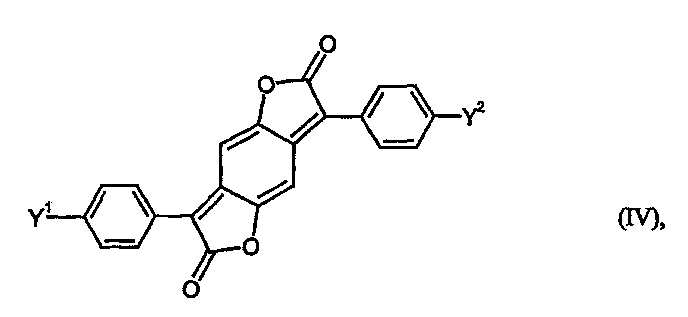 worin
- Y¹ und Y²: unabhängig voneinander für H, C₁-C₆-Alkoxy, das durch C₁-C₄-Alkoxycarbonyl, C₁-C₄- Alkoxy-C₂-C₄-alkoxycarbonyl oder Furfuryl substituiert sein kann, oder für -OC₂H₄-O-C₁-C₄-Alkyl oder -OC₂H₄-O-(C₂H₄O)₁₋₆C₁₋C₄-Alkyl stehen.

Unter diesen seien besonders die folgenden erwähnt:

(IVa) Y¹ = OCH₂CH₂CH₃, Y² = H

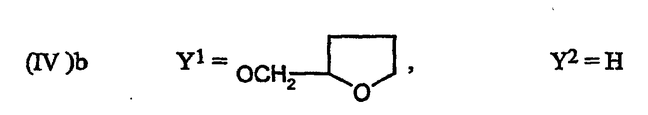

(IVc) Y¹=OCH₂CH₂CH₃, Y²=OCH₂CO₂C₂H₄OC₂H₅

(IVd) Y¹ = H , Y² = OCH₂CO₂C₂H₄OC₂H₅

Bevorzugt sind Farbstoffmischungen enthaltend mindestens einen Farbstoff der Formel (I) und mindestens einen Farbstoff der Formel (IV).

Weiterhin bevorzugt sind Farbstoffmischungen enthaltend mindestens einen Farbstoff der Formel (I) und mindestens einen Dispersionsfarbstoff der Formel (V) 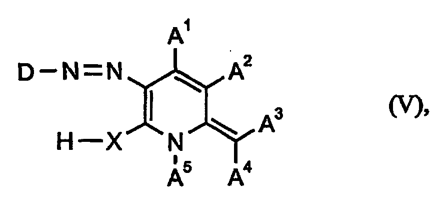 worin
- D: für den Rest einer carbo- oder heterocyclischen Diazokomponente steht,
- A¹ und A²: unabhängig voneinander für H oder einen für Pyridone typische Substituenten stehen,
- A⁵: für H, einen Rest der Formel T, -OT¹, NH₂, -NHT, -NT₂, -NHCOH, -NHCOT, -N=CH-T, -N=CT₂ oder -NHSO₂T steht,
oder
- A¹ und A²: und/oder
- A² und A³: und/oder
- A⁴ und A⁵: zusammen mit den jeweils dazwischenliegenden Atomen einen ungesättigten, gegebenenfalls substituierten 5- oder 6-gliedrigen Carbo- oder Heterocyclus bilden, mit der Maßgabe, dass bei einer Ringbildung unter Beteiligung eines der beiden Reste A³ und A⁴ der nicht beteiligte Rest einen elektronenziehenden Rest bedeutet,
- X: für O, NH, NT, NCOT, NCO₂T oder NSO₂T steht,
- A³ und A⁴: unabhängig voneinander für -CN, -CO₂T, -CONH₂, -CONHT, -CONT₂, CF₃, -CHO, -COT, -SO₂T, -SO₃T⁴, -SO₃T⁵, SO₂NH₂, SO₂NHT, SO₂NT₂, -SOT, -CH=NH, -CH=NT, -CT=NH, -CT=NT, 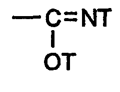 -CO-CO₂T, -NO₂, - NO, T⁴ oder T⁵ stehen, wobei vorzugsweise A³ und A⁴ nicht gleichzeitig für T⁴ und/oder T⁵ stehen,
oder
- A³ und A⁴: zusammen mit dem C-Atom, an das sie gebunden sind, für eine cyclische methylenaktive Verbindung der Formel (VIa) bis (VIv) stehen, wobei diese Reste in Form von 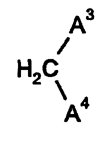 angegeben sind: 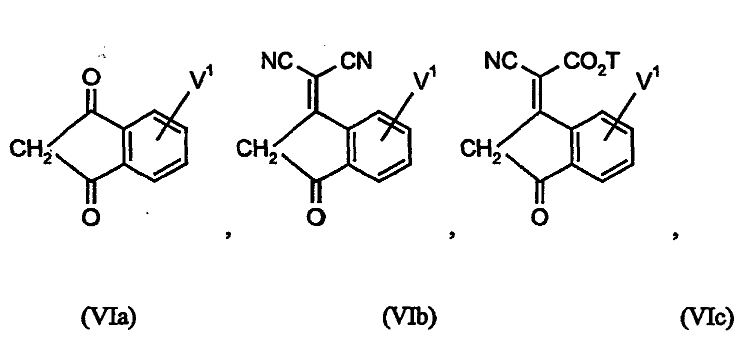 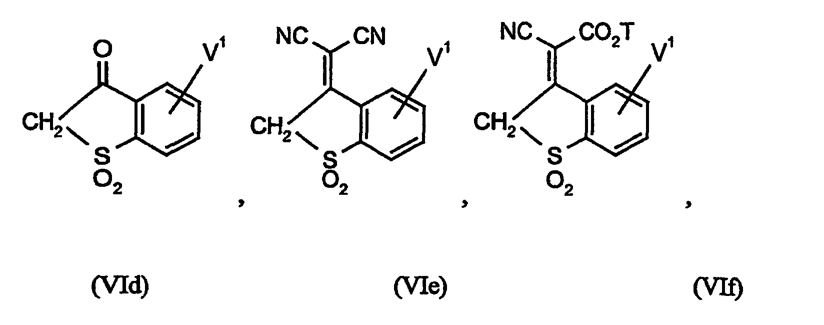 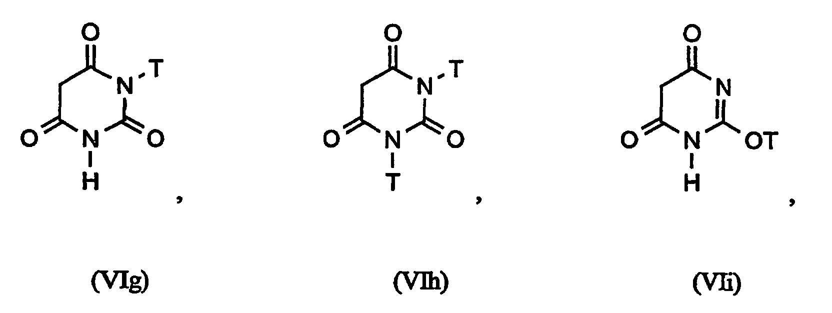 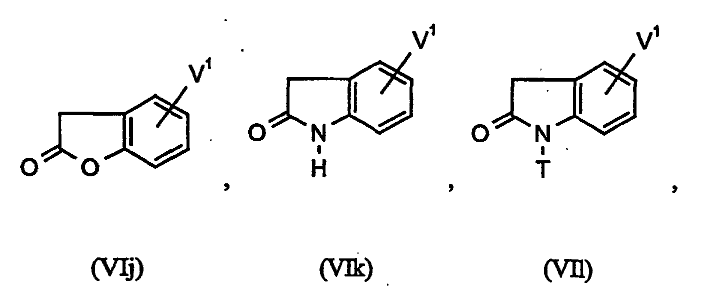 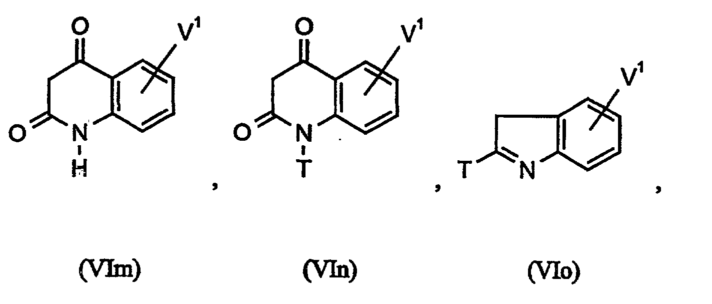 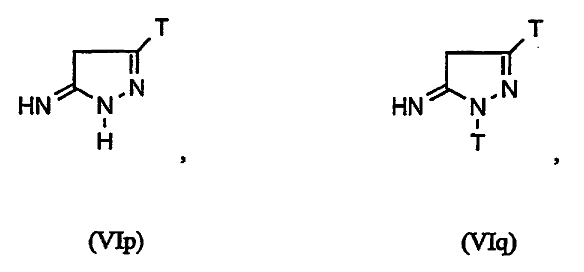 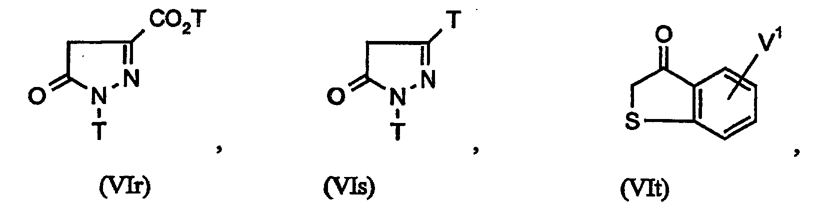 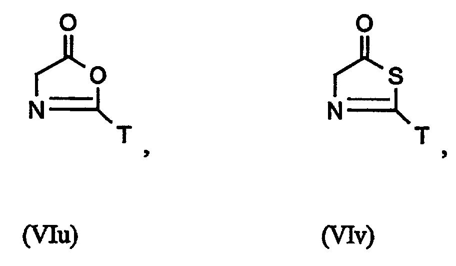
worin
- V¹: für H oder einen Substituenten, insbesondere Cl, Br, CH₃, -CO₂T¹, -CN, -NO₂, -CF₃ oder -SO₂T¹ steht und
worin
- T: für T¹ bis T⁵ steht, wobei
T¹ Alkyl Cycloalkyl oder Aralkyl bedeutet,
T² Alkenyl bedeutet,
T³ Alkinyl bedeutet,
T⁴ Aryl bedeutet,
T⁵ Hetaryl bedeutet.

Unter Dispersionsfarbstoffen der Formel (V) sind solche besonders bevorzugt, worin
- A¹: H, T¹, T⁴ oder -CF₃,
- A²: H, -CN, -CO₂T¹, -CONHT¹ oder -CF₃,
- A³ und A⁴: unabhängig voneinander -CN, -CO₂T¹, -CONHT¹, -CF₃, -CHO, -COT, -SO₂T, NO₂, -T⁴ oder -T⁵ bedeuten,
wobei A³ und A⁴ nicht gleichzeitig für T⁴ oder T⁵ stehen,
- A⁵: für H, T¹, T², T⁴ steht,
- D: einen Rest der Formel 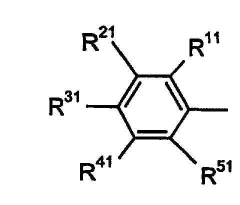 bedeutet, worin
- R¹¹ und R⁵¹: unabhängig voneinander für H, CF₃, Cl, Br, -CN, -NO₂, -CO₂T¹, T¹, T⁵, -SO₂T¹, - SO₂T⁴, -OT¹, -OT², -OT⁴, -OCOT¹, -OCOT⁴, -OSO₂T¹ oder -OSO₂T⁴ stehen,
- R²¹ und R⁴¹: unabhängig voneinander H, Cl, Br, -NO₂, -CF₃, T¹, -OT¹, -OT², -OT⁴, -OCOT¹, -OCOT⁴, -OSO₂T¹ oder -OSO₂T⁴ bedeuten,
- R³¹: für H, Cl, Br, -CN, -NO₂, -CF₃, -CO₂T¹, T¹, T⁵, -OT¹, -OT², -OT⁴, -OCOT¹, -OCOT⁴, -SO₃T¹ oder -SO₂T⁴ steht,
- T¹: für C₁-C₈-Alkyl steht, das gegebenenfalls substituiert ist durch C₁-C₈-Alkoxy, -C₁-C₈-Alkoxy -C₂-C₅-alkoxy, -OCOT¹, -CO₂T¹, Cl, Br, -CN oder T⁴,
- T²: für C₂-C₈-Alkenyl steht, das gegebenenfalls substituiert ist durch -C₁-C₈-Alkoxy, C₁-C₈-Alkoxy-C₂-C₅-alkoxy, -CN, -CO₂T¹, Cl oder Br,
- T⁴: für Phenyl steht, das gegebenenfalls substituiert ist durch Cl, Br, T¹, OT¹, -CF₃, -NO₂, -CN oder -CO₂T¹,
- T⁵: Oxazol, Phenyloxazol, Benzoxazol, Thiazol, Benztbiazol, Thiadiazol oder Thiophen bedeutet, das gegebenenfalls substituiert ist durch Cl, Br, T¹, -NO₂ und/oder-CO₂T¹ und
- x: O bedeutet.

Unter den Dispersionsfarbstoffen der Formel (V) sind solche ganz besonders bevorzugt, worin
- A¹: für H oder T¹ steht,
- A²: H, -CN oder-CO₂T¹ bedeutet,
- A³: für -CN oder -CO₂T¹ steht,
- A⁴: A³ bedeutet,
- A⁵: für H oder T¹ steht,
- D: für einen Rest der Formel 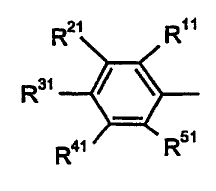 steht, worin
- R¹¹ und R⁵¹: unabhängig voneinander H, Cl, Br, -CN, -NO₂, -CO₂T¹, T¹, -OT¹ oder -OT⁴ bedeuten,
- R²¹ und R⁴¹: unabhängig voneinander H, Cl, Br, -NO₂, T¹ oder -OT¹ bedeuten,
- R³¹: für H, Cl, Br, -CN, -NO₂, T¹, -CO₂T¹ oder -OT¹ steht,
- T¹: für C₁-C₆-Alkyl steht,
- T⁴: für Phenyl steht, das gegebenenfalls substituiert ist durch Cl, Br, -NO₂ und/oder -CO₂T¹ und
- X: O bedeutet.

Ebenfalls bevorzugt sind Farbstoffmischungen enthaltend mindestens einen Farbstoff der Formel (I), mindestens einen Farbstoff der Formel (IV) und mindestens einen Farbstoff der Formel (V).

Die erfindungsgemäßen Farbstoffe und Farbstoffmischungen können durch Mahlung z.B. in einer Perlmühle, unter Zusatz von Hilfsmitteln wie z.B. Dispergiermitteln, Netzmitteln, Entstaubungsmitteln in feste oder flüssige Präparationen überführt werden.

### Beispiel 1

In eine Mischung von 7,3 ml 50-%ige Schwefelsäure und 9,0 ml 96-%ige Schwefelsäure wurden bei 0°C langsam 9,1 g 4-Amino-3-nitrophenol eingetragen. Bei 0°C wurden 11 ml 40-%ige Nirosylschwefelsäure zugetropft. Man ließ 4 Stunden bei 0°C nachreagieren und tropfte die Lösung der Diazotienrung zu einer alkalischen Lösung von 10,0 g 6-Hydroxy-1-methyl-2-(1H)-pyridinyliden-propandinitril und 2 g Harnstoff in 300 ml Wasser. Durch Zugabe von wenig Eis wurde die Temperatur bei 0-5°C gehalten. Mit Natriumacetat wurde auf pH 2 gestellt. Man ließ über Nacht nachrühren, saugte ab, wusch mit Wasser und erhielt nach Trocknen des Presskuchens 10 g des Farbstoffs der Formel 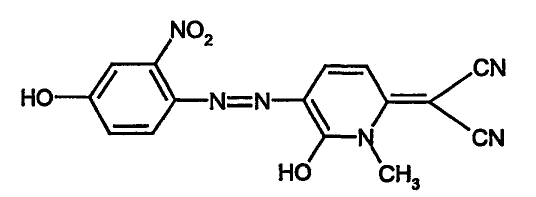 der durch Umkristallisieren aus DMF weiter gereinigt werden kann.${\text{λ}}_{\text{max}} {\text{= 517 mm (CH}}_{\text{2}} {\text{Cl}}_{\text{2}} \text{)}$

Der Farbstoff färbt Polyester in einem klaren Rot mit hervorragenden Echtheiten insbesondere Nassechtheiten und Sublimierechtheit.

Nach analogen oder ähnlichen Verfahren können die nachfolgenden Farbstoffe erhalten werden, die ebenfalls Polyester mit guten Echtheiten anfärben.

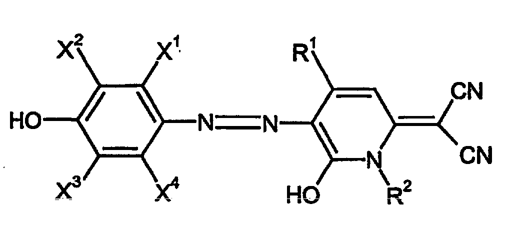

| Bsp. Nr. | X¹ | X² | X³ | X⁴ | R¹ | R² | λ_{max.} (nm) | Ton auf Polyester |
|---|---|---|---|---|---|---|---|---|
| 2 | -NO₂ | H | H | H | H | C₂H₅ | 517(CH₂Cl₂) | rot |
| 3 | -NO₂ | H | H | H | CH₃ | CH₃ | 517 (DNF) | rot |
| 4 | -NO₂ | H | H | H | CH₃ | C₂H₅ | 517 (DMF) | rot |
| 5 | -CO₂CH₃ | H | H | H | H | CH₃ | 504(CH₂Cl₂) | rot |
| 6 | H | Cl | Cl | H | H | CH₃ | 496(CH₂Cl₂) | scharlach |
| 7 | H | H | H | H | H | CH₃ | 508(CH₂Cl₂) | rot |
| 8 | Br | H | H | H | H | CH₃ | 505(CH₂Cl₂) | rot |

### Beispiel 9

Durch Perlmahlung und anschließender Sprühtrocknung wird ein Färbepräparat aus 10 Teilen des Farbstoffs von Beispiel 1, 10 Teilen des Farbstoffs von Beispiel 2, 10 Teilen des Farbstoffs der Formel 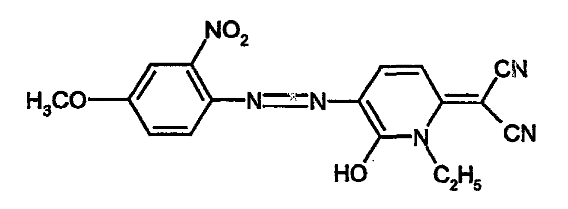 63 Teilen Stellmittel auf Basis eines Dispergiermittels (handelsübliches Ligninsulfonat: Kondensationsprodukte aus Formaldehyd, Naphthalin und Schwefelsäure), handelsüblicher Netzmittel (alkoxylierte Alkylphenole), handelsüblicher Entstaubungsmittel (Mineralöl mit Emulgatoren) und 7 Teilen Restfeuchte hergestellt.

In einem Färbebad, das mit Natriumphosphat und Essigsäure auf einen pH-Wert von 4,5 gestellt ist, werden 100 Teile eines Polyestergewebes (Polyethylenterephthalat) 30 bis 45 Minuten bei 125 bis 135°C mit 0,9 g des oben beschriebenen Färbepräparates (Flottenverhältnis 1:10 bis 1:40) gefärbt.

Man erhält klare, rote Färbungen mit guten Echtheiten, insbesondere gutem Ziehvermögen und hervorragender Thermomigrierechtheit.

### Beispiel 10

Durch Perlmahlung und anschließender Sprühtrocknung wird ein Färbepräparat aus

| | |
|---|---|
| 18,8 Teilen | des Farbstoffs von Beispiel 4, |
| 12,5 Teilen | des Farbstoffs von Beispiel 3, |
| 62,6 Teilen | Stellmittel auf Basis handelsüblicher Ligninsulfonate, handelsüblicher Dispergiermittel (Kondensationsprodukte aus Formaldehyd, Naphthalin und Schwefelsäure), handelsüblicher Netzmittel (alkoxylierte Alkylphenole), handelsüblicher Entstaubungsmittel (Mineralöl mit Emulgatoren) und |
| 6,1 Teilen | Restfeuchte |

hergestellt.

In einem Färbebad, das mit Natriumphosphat und Essigsäure auf einen pH-Wert von 4,5 gestellt ist, werden 100 Teile eines Polyestergewebes (Polyethylenterephthalat) 30 bis 45 Minuten bei 125 bis 135°C mit 0,75 g des oben beschriebenen Färbepräparates (Flottenverhältnis 1:10 bis 1:40) gefärbt.

Man erhält klare, rote Färbungen mit guten Echtheiten, insbesondere gutem Ziehvermögen und hervorragender Thermomigrierechtheit.

## Patentansprüche

1. Hydroxypyridonmethidazofarbstoffe entsprechend der Formel (I) sowie deren tautomere Formen, 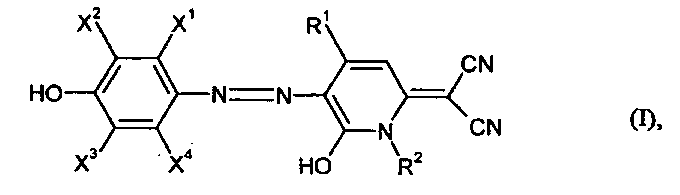 worin
X¹, für H, Cl, Br, -CO₂-R² oder -NO₂ steht,
X^{2,} X³ und X⁴ unabhängig voneinander für H, Cl oder Br stehen,
R¹ für H, -CH₃, -C₂H₅, -CH(CH₃)₂, unsubstituiertes Phenyl oder CF₃ steht und
R² für CH₃ oder C₂H₅ steht.

2. Farbstoffe gemäß Anspruch 1, **dadurch gekennzeichnet, dass** X², X³ und X⁴ für H stehen.

3. Farbstoffe gemäß wenigstens einem der Ansprüche 1 und 2, **dadurch gekennzeichnet, dass**
X¹ für H, Cl, Br, oder -NO₂ steht,
X², X³ und X⁴ für H stehen,
R¹ für H, -CH₃, -C₂H₅, oder -CH(CH₃)₂ steht, und
R² für CH₃ oder -C₂H₅ steht.

4. Farbstoffe gemäß wenigstens einem der Ansprüche 1 bis 3, **dadurch gekennzeichnet, dass**
X¹ für Nitro,
X², X³ und X⁴ für H,
R¹ für H oder CH₃ und
R² für CH₃ oder C₂H₅ steht.

5. Verfahren zur Herstellung der Farbstoffe gemäß Anspruch 1, **dadurch gekennzeichnet, dass** man Amine der Formel (II) 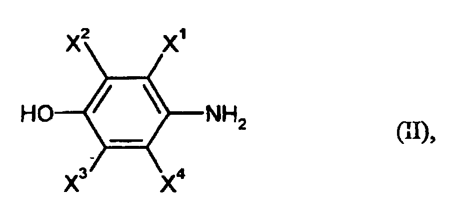 worin
X¹, X², X³ und X⁴ die in Anspruch 1 angegebenen Bedeutungen haben,
diazotiert und auf Kupplungskomponenten der Formel (III) 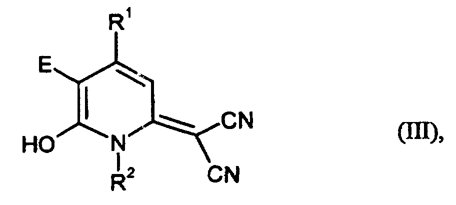 worin
R¹ und R² die in Anspruch 1 angegebene Bedeutung haben und
E für einen durch elektrophile Substitution verdrängbaren Substituenten, steht,
kuppelt.

6. Farbstoffmischung enthaltend wenigstens zwei unterschiedliche Farbstoffe der Formel (I) gemäß Anspruch 1.

7. Farbstoffmischung gemäß Anspruch 7, **dadurch gekennzeichnet, dass** die Farbstoffe der Formel (I) sich an den Substituenten R¹ und/oder R² unterscheiden, wobei
R¹ für H oder CH₃ und
R² für CH₃ oder C₂H₅ stehen.

8. Farbstoffmischung enthaltend wenigstens einen Farbstoff der Formel (I) gemäß Anspruch 1 und wenigstens einen von Formel (I) verschiedenen Dispersionsfarbstoff.

9. Farbstoffmischung enthaltend wenigstens einen Farbstoff der Formel (I) gemäß Anspruch 1, wenigstens einen Farbstoff der Formel (IV) 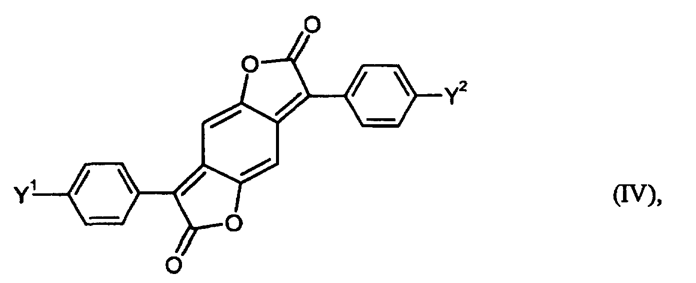 worin
Y¹ und Y² unabhängig voneinander für H, C₁-C₆-Alkoxy, das durch C₁-C₄-Alkoxycarbonyl, C₁-C₄-Alkoxyr-C₂-C₄-alkoxycarbonyl oder Furfuryl substituiert sein kann, -OC₂H₄-O-C₁-C₄-Alkyl, -OC₂H₄-O-(C₂H₄O)₁₋₆-C₁H₄- C₄-Alkyl stehen,
und/oder wenigstens einen Farbstoff der Formel (V) 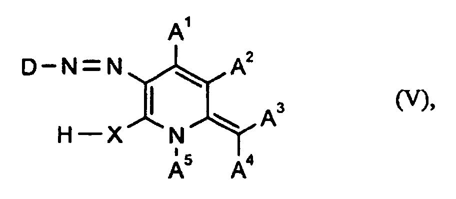 worin
D für den Rest einer carbo- oder heterocyclischen Diazokomponente steht,
A¹ und A² unabhängig voneinander für H oder einen für Pyridone typische Substituenten stehen,
A⁵ für H, einen Rest der Formel T, -OT¹, -NH₂, -NHT, -NT₂, -NHCOH, -NHCOT, -N=CH-T, -N=CT₂ oder -NHSO₂T steht,
oder
A¹ und A² und/oder
A² und A³ und/oder
A⁴ und A⁵ zusammen mit den jeweils dazwischenliegenden Atomen einen ungesättigten, gegebenenfalls substituierten 5- oder 6-gliedrigen Carbo- oder Heterocyclus bilden, mit der Maßgabe, dass bei einer Ringbildung unter Beteiligung eines der beiden Reste A³ und A⁴ der nicht beteiligte Rest einen elektronenziehenden Rest bedeutet.
X für O, NH, NT, NCOT, NCO₂T oder NSO₂T steht,
A³ und A⁴ unabhängig voneinander für -CN, -CO₂T, -CONH₂, -CONHT, -CONT₂, CF₃, -CHO, -COT, -SO₂T, -SO₃T⁴, -SO₃T⁵, SO₂NH₂, SO ₂NHT, SO₂NT₂, -SOT, -CH=NH, -CH=NT, -CT=NH, -CT=NT, 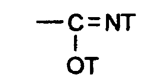 -CO-CO₂T, -NO₂, -NO, T⁴ oder T⁵
stehen, wobei vorzugsweise A³ und A⁴ nicht gleichzeitig für T⁴ und/oder T⁵ stehen, oder
A³ und A⁴ zusammen mit dem C-Atom, an das sie gebunden sind, für eine cyclische methylenaktive Verbindung der Formel (VIa) bis (VIv) stehen, wobei diese Reste in Form von 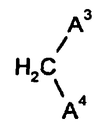 angegeben sind: 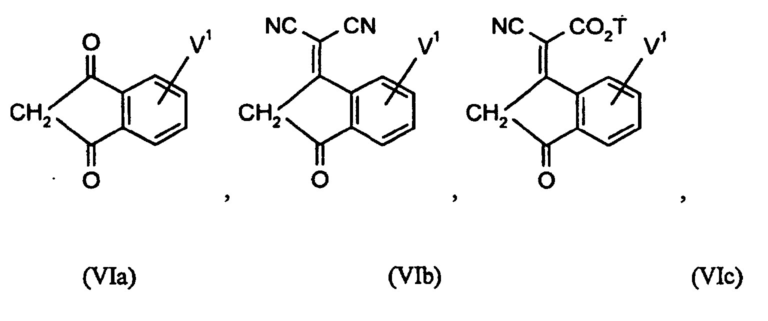 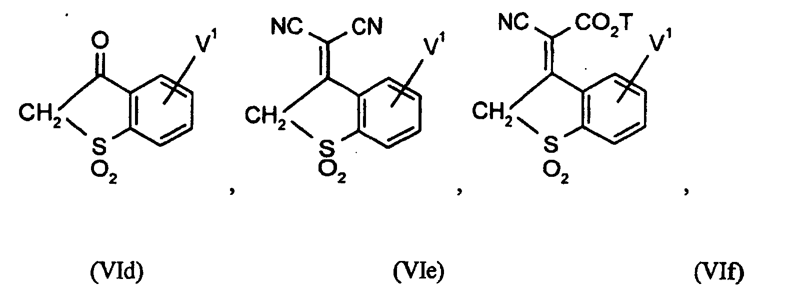 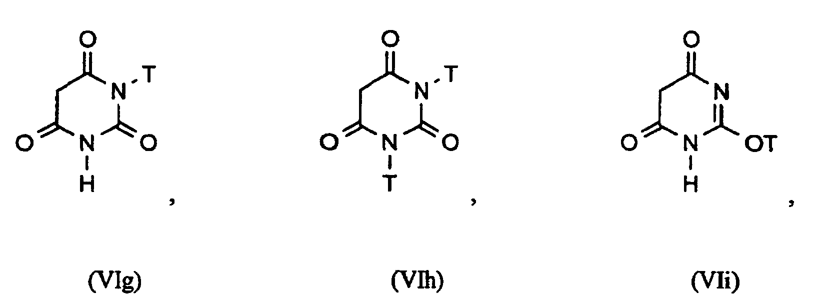 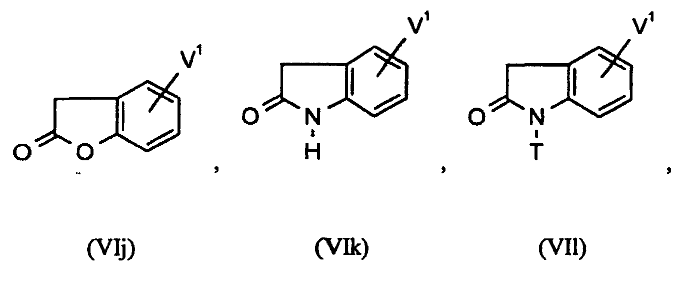 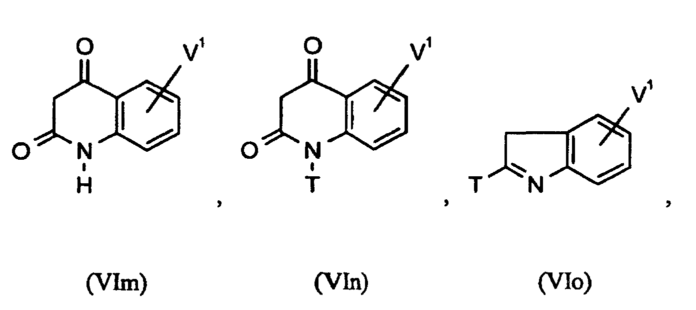 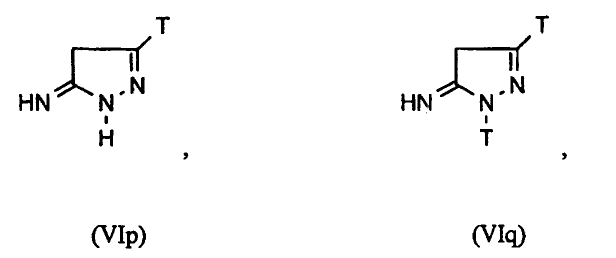 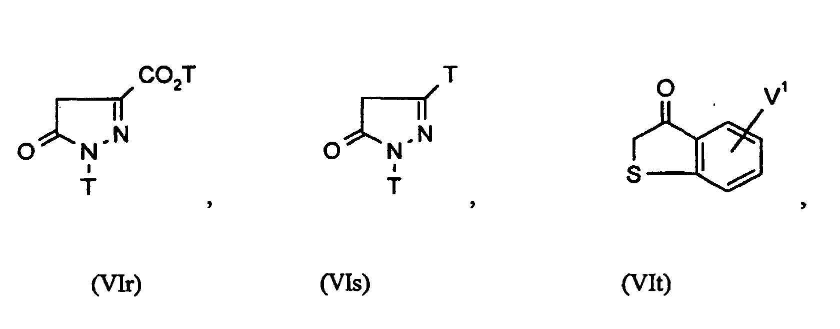 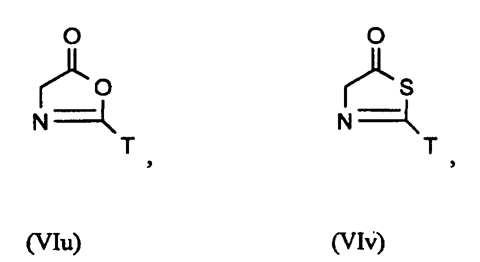
worin
V¹ für H oder einen Substituenten, insbesondere Cl, Br, CH₃, -CO₂T¹, -CN, -NO₂, -CF₃ oder -SO₂T¹ steht und
worin
T für T¹ bis T⁵ steht, wobei
T¹ Alkyl, Cycloalkyl oder Aralkyl bedeutet,
T² Alkenyl bedeutet,
T³ Alkinyl bedeutet,
T⁴ Aryl bedeutet,
T⁵ Hetaryl bedeutet.

10. Verwendung von wenigstens einem Farbstoff gemäß Ansprüchen 1 bis 4 oder von einer Farbstoffmischung gemäß wenigstens einem der Ansprüche 6 bis 9 zum Färben und Bedrucken von hydrophoben synthetischen Fasermaterialien oder von Mischungen hydrophober synthetischer Fasermaterialien mit natürlichen Faserstoffen.

11. Verwendung gemäß Anspruch 10, **dadurch gekennzeichnet, dass** es sich bei den hydrophoben synthetischen Fasermaterialien um Cellulose-2½-Acetat, Cellulosetriacetat, Polyamide und Polyester und bei den natürlichen Faserstoffen um Baumwolle, regenerierte Cellulosefasern oder Wolle handelt.

12. Hydrophobe synthetische Materialien, gefärbt mit Farbstoffen oder Farbstoffmischungen gemäß wenigstens einem der Ansprüche 1 bis 4 und 6 bis 9.

## Claims

1. A hydroxypyridonemethide azo dye conforming to the formula (I) and its tautomeric forms 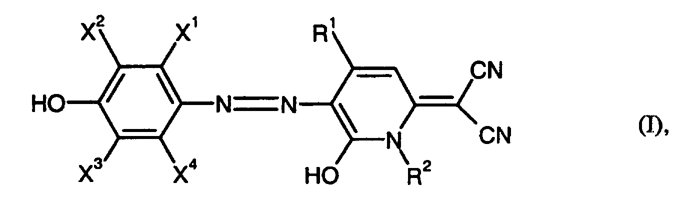 where
X¹ is H, Cl, Br, -CO₂-R² or -NO₂,
X², X³ and X⁴ are independently H, Cl or Br,
R¹ is H, -CH₃, -C₂H₅, -CH(CH₃)₂, unsubstituted phenyl or CF₃, and
_{R}2 is CH₃ or C₂H₅.

2. A dye as claimed in claim 1, wherein
X², X³ and X⁴ are each H.

3. A dye as claimed in at least one of claims 1 and 2, wherein
X¹ is H, Cl, Br, or -NO₂,
X², X³ and X⁴ are each H,
R¹ is H, -CH₃, -C₂H₅, or -CH(CH₃)₂, and
R² is CH₃ or -C₂H₅.

4. A dye as claimed in at least one of claims 1 to 3, wherein
X¹ is nitro,
X², X³ and X⁴ are each H,
R¹ is H or CH₃, and
R² is CH₃ or C₂H₅.

5. A process for preparing the dye of claim 1, which comprises diazotizing an amine of the formula (II) 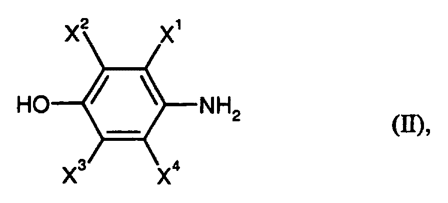 where
X¹, X², X³ and X⁴ are each as defined in claim 1,
and coupling it onto a coupling component of the formula (III) 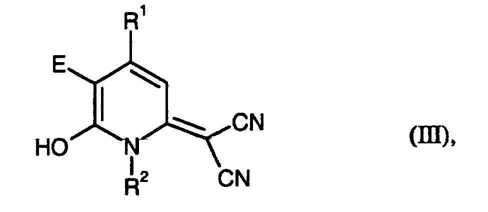 where
R¹ and R² are each as defined in claim 1 and
E is a substituent that is displaceable by electrophilic substitution.

6. A dye mixture containing at least two different dyes of the formula (I) as claimed in claim 1.

7. A dye mixture as claimed in claim 6, wherein the dyes of the formula (I) differ with regard to R¹ and/or R²,
R¹ being H or CH₃ and
R2 being CH₃ or C₂H₅.

8. A dye mixture containing at least one dye of the formula (I) as claimed in claim 1 and at least one disperse dye that differs from the formula (I).

9. A dye mixture containing at least one dye of the formula (I) as claimed in claim 1, at least one dye of the formula (IV) 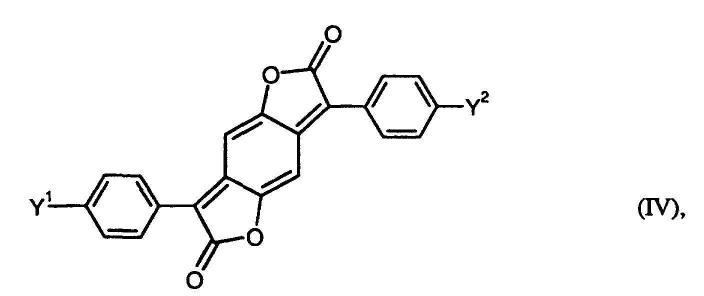 where
Y¹ and Y² are independently H, C₁-C₆-alkoxy, with or without C₁-C₄-alkoxycarbonyl, C₁-C₄-alkoxy-C₂-C₄-alkoxycarbonyl or furfuryl substitution, -OC₂H₄-O-C₁-C₄-alkyl, -OC₂H₄-O-(C₂H₄O)₁₋₆-C₁-C₄-alkyl,
and/or at least one dye of the formula (V) 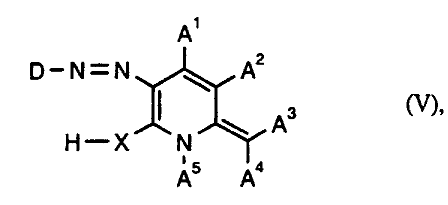 where
D is the radical of a carbo- or heterocyclic diazo component,
A¹ and A² are independently H or a typical pyridone substituent,
A⁵ is H, a radical of the formula T, -OT¹, -NH₂, -NHT, -NT₂, -NHCOH, -NHCOT, -N=CH-T, -N=CT₂ or -NHSO₂T,
or
A¹ and A² and/or
A² and A³ and/or
A⁴ and A⁵ combine with the atoms in between in each case to form an unsaturated, substituted or unsubstituted 5- or 6-membered carbo- or heterocycle, with the proviso that in the event of ring formation by participation of one of A³ and A⁴ the nonparticipant radical is an electron-attracting radical,
X is O, NH, NT, NCOT, NCO₂T or NSO₂T,
A³ and A⁴ are independently -CN, -CO₂T, -CONH₂, -CONHT, -CONT₂, CF₃, -CHO, -COT, -SO₂T, -SO₃T⁴, -SO₃T⁵, SO₂NH₂, SO₂NHT, SO₂NT₂, - SOT, -CH=NH, -CH=NT, -CT=NH, -CT=NT, 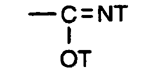 -CO-CO₂T, -NO₂, -NO, T⁴ or T⁵
but A³ and A⁴ are preferably not both T⁴ and/or T⁵
or
A³ and A⁴ combine with the carbon atom to which they are attached to form a cyclic active-methylene compound of the formula (VIa) to (VIv), these radicals being specified in the form of 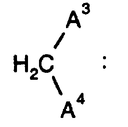 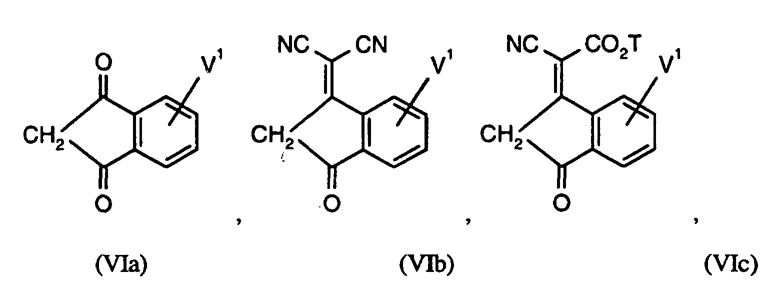 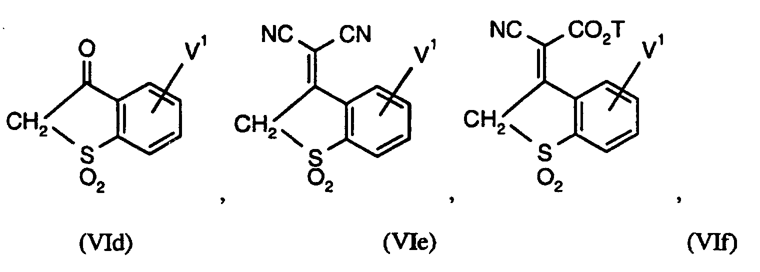 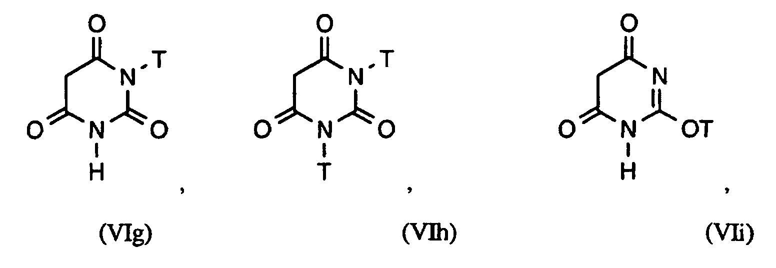 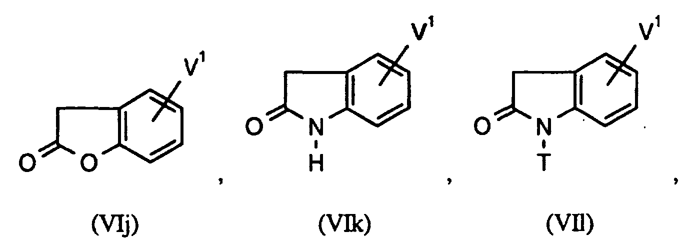 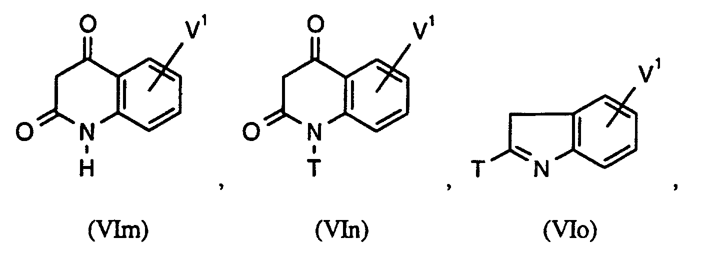 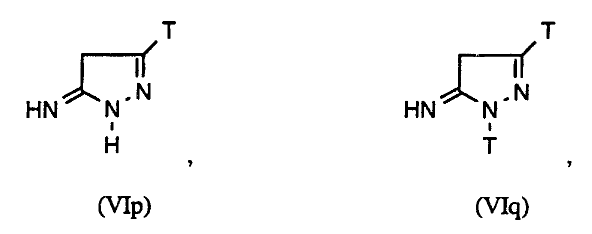 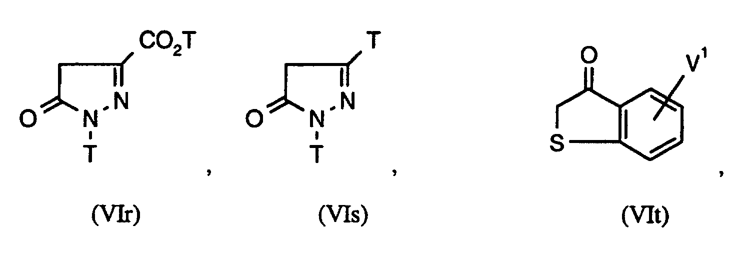 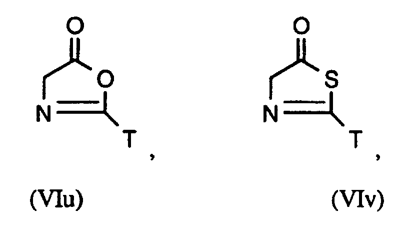
where
V¹ is H or a substituent, especially Cl, Br, CH₃, -CO₂T¹, -CN, -NO₂, -CF₃ or
-SO₂T, and
where
T is T¹ to T⁵, where
T¹ is alkyl, cycloalkyl or aralkyl,
T² is alkenyl,
T³ is alkynyl,
T⁴ is aryl and
T⁵ is hetaryl.

10. The use of at least one dye as claimed in claims 1 to 4 or of a dye mixture as claimed in at least one of claims 6 to 9 for dyeing and printing hydrophobic synthetic fiber materials or blends of hydrophobic synthetic fiber materials with natural fiber materials.

11. The use of claim 10, wherein the hydrophobic synthetic fiber materials are secondary cellulose acetate, cellulose triacetate, polyamides and polyesters and the natural fiber materials are cotton, regenerated cellulose fibers or wool.

12. A hydrophobic synthetic material dyed with dyes or dye mixtures as claimed in at least one of claims 1 to 4 and 6 to 9.

## Revendications

1. Colorants azoïques hydroxypyridoneméthide correspondant à la formule (I) ainsi qu'à ses formes tautomères, 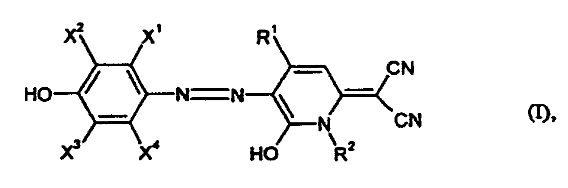 dans laquelle
X¹ représente H, Cl, Br, -CO₂-R² ou -NO₂,
X², X³ et X⁴ représentent, indépendamment les uns des autres, H, Cl ou Br,
R¹ représente H, -CH₃, -C₂H₅, -CH(CH₃)₂, le groupe phényle non substitué ou CF₃ et
R² représente CH₃ ou C₂H₅.

2. Colorants selon la revendication 1, **caractérisés en ce que** X², X³ et X⁴ représentent H.

3. Colorants selon la revendication 1 ou 2, **caractérisés en ce que**
X¹ représente H, Cl, Br ou -NO₂,
X², X³ et X⁴ représentent H,
R¹ représente H, -CH₃, -C₂H₅ ou -CH(CH₃)₂, et
R² représente -CH₃ ou -C₂H₅.

4. Colorants selon au moins l'une des revendications 1 à 3, **caractérisés en ce que**
X¹ représente le groupe nitro,
X², X³ et X⁴ représentent H,
R¹ représente H ou CH₃, et
R² représente CH₃ ou C₂H₅.

5. Procédé pour la préparation des composés selon la revendication 1, **caractérisé en ce qu'**on soumet à une diazotation des amines de formule (II) 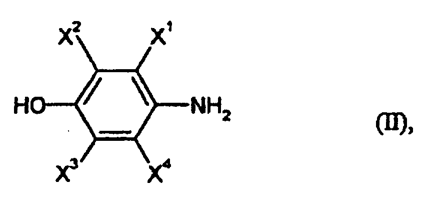 dans laquelle
X¹, X², X³ et X⁴ ont les significations données dans la revendication 1, et on les fait copuler sur des copulants de formule (III) 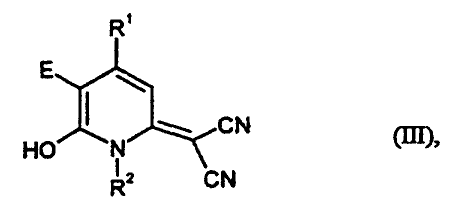 dans laquelle
R¹ et R² ont les significations données dans la revendication 1 et
E représente un substituant apte à être déplacé par substitution électrophile.

6. Mélange de colorants contenant au moins deux différents colorants de formule (I) selon la revendication 1.

7. Mélange de colorants selon la revendication 6, **caractérisé en ce que** les colorants de formule (I) diffèrent par les substituants R¹ et/ou R²,
R¹ représentant H ou CH₃ et
R² représentant CH₃ ou C₂H₅,

8. Mélange de colorants contenant au moins un colorant de formule (I) selon la revendication 1 et au moins un colorant en dispersion différent de la formule I.

9. Mélange de colorants contenant au moins un colorant de formule (I) selon la revendication 1, au moins un colorant de formule (IV) 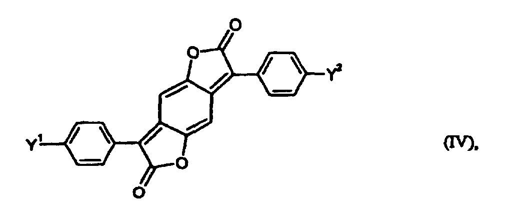 dans laquelle
Y¹ et Y² représentent, indépendamment l'un de l'autre, H, un groupe alcoxy en C₁-C₆ qui peut être substitué par un groupe alcoxy-(C₁-C₄)carbonyle, alcoxy(C₁-C₄)alcoxy(C₂-C₄)carbonyle ou furfuryle, ou un groupe -OC₂H₄-O-alkyle(C₁-C₄), -OC₂H₄-O-(C₂H₄O)₁₋₆-alkyle(C₁-C₄),
et/ou au moins un colorant de formule (V) 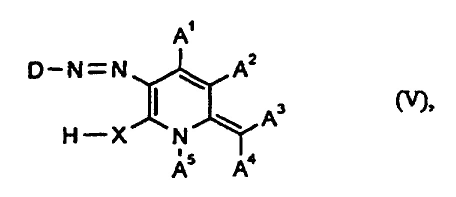 dans laquelle
D représente le reste d'un composant diazotable carbocyclique ou hétérocyclique,
A¹ et A² représentent, indépendamment les uns des autres, H ou un substituant caractéristique pour pyridones,
A⁵ représente un reste de formule T, -OT¹, -NH₂, -NHT, -NT₂, -NHCOH, NHCOT, -N=CH-T, -N=CT₂ ou -NHSO₂T,
A¹ et A² et/ou
A² et A³ et/ou
A⁴ et A⁵ représentent ensemble, avec les atomes se trouvant entre eux dans chaque cas, un cycle carbocyclique ou hétérocyclique à 5 ou 6 chaînons, insaturé, éventuellement substitué, étant entendu que dans le cas de formation d'un cycle avec participation d'un des deux restes A³ et A⁴, le reste non participant représente un radical attirant les électrons,
X représente O, NH, NT, NCOT, NCO₂T ou NSO₂T,
A³ et A⁴ représentent, indépendamment l'un de l'autre, -CN, -CO₂T, -CONH₂, -CONHT, -CONT₂, -CF₃, -CHO, -COT, -SO₂T, -SO₃T⁴, -SO₃T⁵, -SO₂NH₂, -SO₂NHT, -SO₂NT₂, -SOT, -CH=NH, -CH=NT, -CT=NH, -CT=NT, 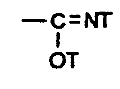 -CO-CO₂T, -NO₂, -NO, T⁴ ou T⁵,
de préférence A³ et A⁴ ne représentant simultanément T⁴ et/ou T⁵,
ou
A³ et A⁴ représentent ensemble, avec l'atome de carbone auquel il sont fixés, un composé cyclique à groupe méthylène actif de formule (VIa) à (VIv), ces radicaux
étant indiqués sous forme de 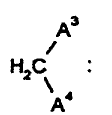 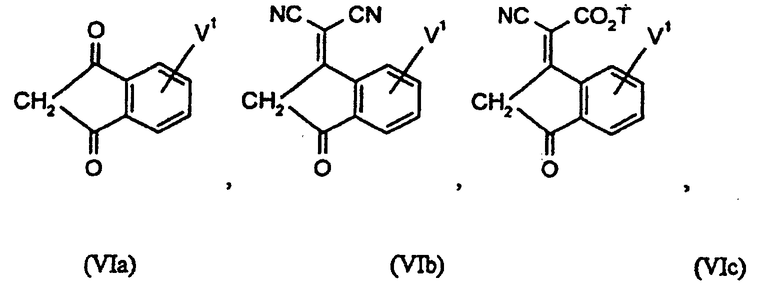 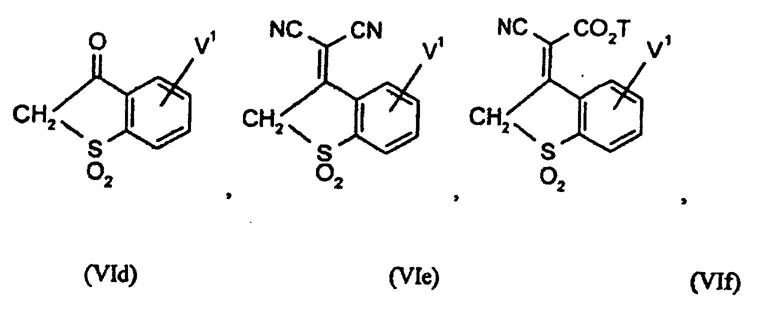 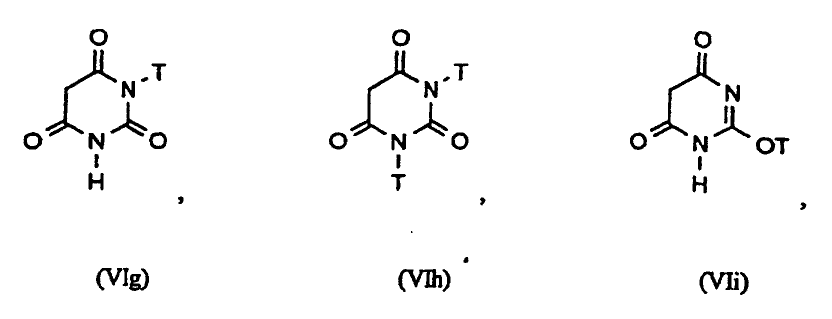 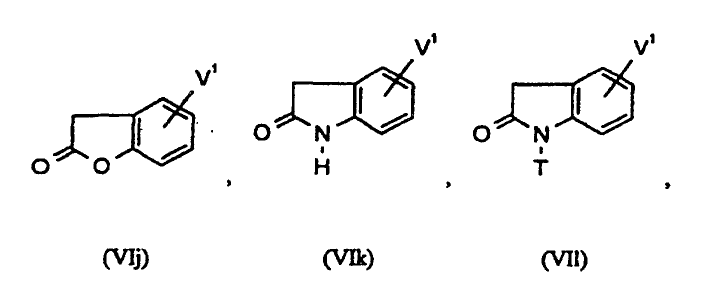 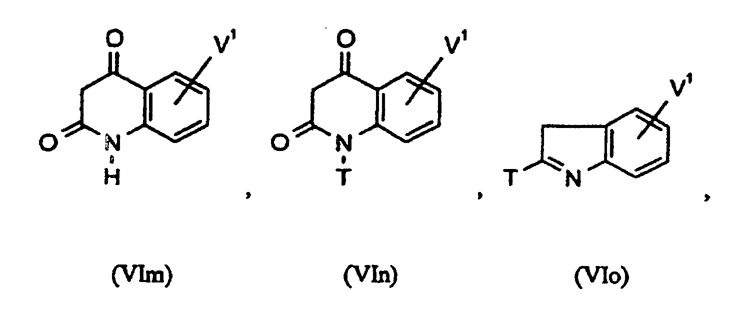 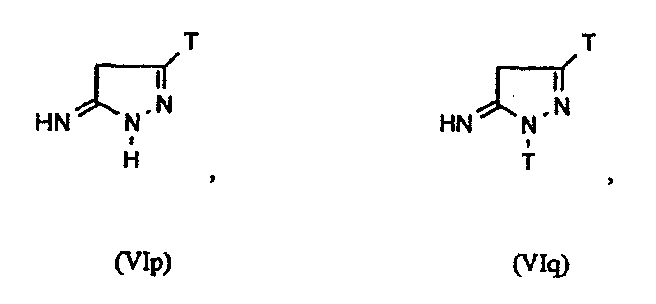 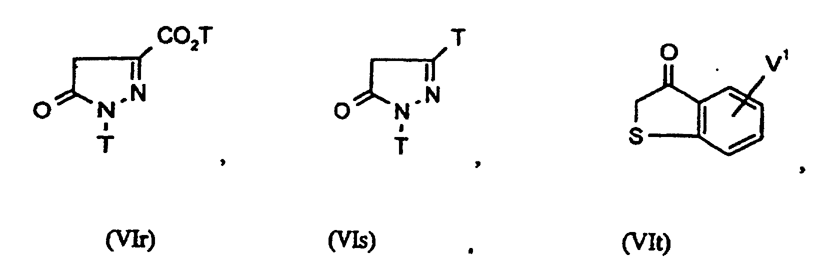 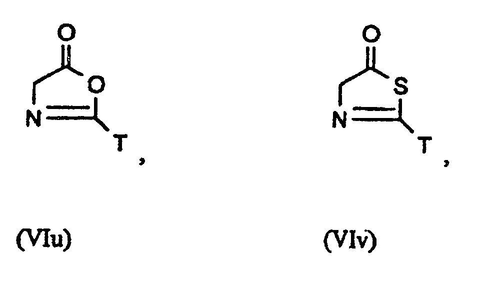
dans lesquelles
V¹ représente H ou un substituant, en particulier CI, Br, CH₃, -CO₂T¹, -CN, -NO₂, -CF₃ ou -SO₂T¹ et
dans lesquelles
T représente T¹ à T⁵,
T¹ représentant un groupe alkyle, cycloalkyle ou aralkyle,
T² représentant un groupe alcényle,
T³ représentant un groupe alcynyle,
T⁴ représentant un groupe aryle,
T⁵ représentant un groupe hétéroaryle.

10. Utilisation d'au moins un colorant selon les revendications 1 à 4, ou d'un mélange de colorants selon au moins l'une des revendications 6 à 9, pour la teinture et l'impression de matériaux fibreux synthétiques hydrophobes ou de mélanges de matériaux fibreux synthétiques hydrophobes avec des matières fibreuses naturelles.

11. Utilisation selon la revendication 10, **caractérisée en ce que** les matériaux fibreux synthétiques hydrophobes consistent en 2½-acétate de cellulose, triacétate de cellulose, polyamides et polyesters et les matières fibreuses naturelles consistent en coton, fibres de cellulose régénérées ou laine.

12. Matériaux synthétiques hydrophobes, teints avec des colorants ou mélanges de colorants selon au moins l'une des revendications 1 à 4 et 6 à 9.
